# EUROPEAN PATENT SPECIFICATION

(11) **EP 3 207 897 B1**
(45) Date of publication and mention of the grant of the patent: **24.10.2018**
(21) Application number: 17154694.8
(22) Date of filing: 03.02.2017
(51) Int. Cl.: A61C 8/00

(54) **TOOL FOR DETACHING THE SCHNEIDER'S MEMBRANE FROM THE SINUS FLOOR**
WERKZEUG ZUM ABLÖSEN DER SCHNEIDERMEMBRAN AUS DEM KIEFERHÖHLENBODEN
OUTIL PERMETTANT DE DÉTACHER LA MEMBRANE DE SCHNEIDER DU PLANCHER DE SINUS

(30) Priority: 16.02.2016 IT UB20160787
(43) Date of publication of application: 23.08.2017
(73) Proprietor: Calabria, Ennio, 88046 Lamezia Terme (CZ) (IT)
(72) Inventor: Calabria, Ennio, 88046 Lamezia Terme (CZ) (IT)
(74) Representative: Cardelli, Guido

(56) References cited:
- US-A1- 2006 084 034
- US-A1- 2010 178 631
- US-A1- 2011 229 846

## Description

The present invention relates to a tool for detaching the Schneider's membrane from the sinus floor.

Detaching the Schneider's membrane is a step of the surgical procedure in order to increase the maxillary bone thickness and facilitate the insertion of dental implants.

The reconstruction of the rear jaw bone requires the integrity of the sinus membrane, known as Schneider's membrane or subantral membrane, which forms a barrier between the sinus cavity and the surrounding bone. The rear alveolar bone is occasionally substantially thinner than other crestal bone portions due to bone resorption in edentulous patients, and then it does not provide a thickness sufficient to ensure a permanent dental implant.

EP 2 364 668 B1, which cites US 2009/0258328 among others, describes a tool for creating a perforation or cavity in the bone structure in the proximity of the sinus thanks to the introduction of a fluid medium in order to elevate the Schneider's membrane from the sinus floor. The tool is essentially a drill head provided with a gingiva abutting stop whose position depends on the thickness of the bone to be drilled. Inside the drill head there is a duct of irrigation which makes possible the separation of the Schneider's membrane by virtue of hydraulic effect before the drill head perforates the sinus floor, thanks to the delivery of a liquid under pressure to the end of the drill head. The liquid used is preferably an isotonic saline solution. The liquid pressure may be excessive, with the risk of damaging the Schneider's membrane.

US 2006/0084034 discloses a method for inserting a dental implant into the alveolar ridge. The method comprises the steps of providing a hole through a portion of the alveolar ridge in a point below the Schneider's membrane, inserting a sleeve into the hole, injecting a filler through said sleeve to increase the bone mass of the alveolar ridge and providing an implant in the hole. The sleeve has an axial hole and radial passageways for injecting the filling substance. Furthermore, the sleeve has an abutment element to adjust its depth in the bone when working. The device which uses said sleeve allows to work both laterally and distally, so as to have a direct impact on the Schneider's membrane.

US 2011/229846 discloses an ultrasonic sinus membrane/periosteum separation tool set consisting of a cutter tool and a spray nozzle for use with a hand piece of an ultrasonic machine. The spray nozzle has a connection base, a pole and an operating tip. The pole has a fluid passage for injecting fluid into a hole made on the alveolar ridge of the gingiva of the patient to be treated. The cutter tool and the operating tip have jet holes for ejecting a direct fluid mainly on the Schneider's membrane.

US 2010/0178631 discloses a bone cutting and injecting device for cutting maxillary bone and injecting a filler through the maxillary bone under the Schneider's membrane to separate the Schneider's membrane from the maxillary bone and fill the space formed therebetween.

Both US 2011/229846 and US 2010/0178631 comprise a cutter tool which has a direct impact on the Schneider's membrane.

One object of the present invention is to allow a gradual detachment of the Schneider's membrane by preventing a saline solution to flow with a component perpendicular to the membrane itself.

In particular, the object of the invention is to provide a tool that does not place excessive stress on the Schneider's membrane with a result of a break of the latter.

Still another object is to provide an adjustable tool to comply with the demands of surgery.

A further object of the present invention is to provide a reliable, inexpensive and non-invasive for the detachment of the Schneider's membrane.

The purposes are achieved by the present invention which provides a tool for the detachment of the Schneider's membrane from the sinus floor comprising a syringe for an isotonic saline solution, a head unit and a flexible tube connecting the syringe to the head unit, wherein the head unit comprises:
- a terminal tract of the flexible tube having a distal end and a proximal end and being provided with at least two radial holes,
- an end element, which closes the terminal tract in its distal end, the end element projecting radially with respect to the terminal tract and working laterally without any direct impact onto the Schneider's membrane from the side of the sinus floor, and
- an abutment member being coaxial to the flexible tube and intended to abut the maxillary bone on the side opposite to the Schneider's membrane, so as to keep patent the at least two radial holes when, in working position, the head unit is inserted into a hole drilled in the maxillary bone in a surgical operation for lifting the sinus floor.

The difference with respect to the other existing tools lies in the fact that they exert an axial thrust of the isotonic saline solution with a direct impact on the thin and fragile Schneider's membrane, while the tool of the present invention, by working laterally, causes a gradual detachment of the membrane without the risk of breaking it. In fact, the end element works as a shield or an umbrella since it directs radially the liquid that flows out from the lateral openings.

Further features and advantages of the present invention will become more apparent from the indicative, and therefore non-limiting, description of embodiments of a tool for detaching the Schneider's membrane from the sinus floor as illustrated in the accompanying drawings in which:
- Figure 1 is a schematic side view of a first embodiment of the tool according to the present invention;
- Figures 2a, 2b, 2c are partial schematic cross-section views of the tool in Figure 1 in the context of surgery;
- Figure 3 is an enlarged partial cross-section view of the tool in Figure 1;
- Figure 4 is an enlarged schematic partial side view of a second embodiment of the tool according to the invention;
- Figure 5 is an enlarged schematic partial side view of a third embodiment of the tool according to the invention; and
- Figure 6 is an enlarged partial cross-section view of a fourth embodiment of the tool according to the invention.

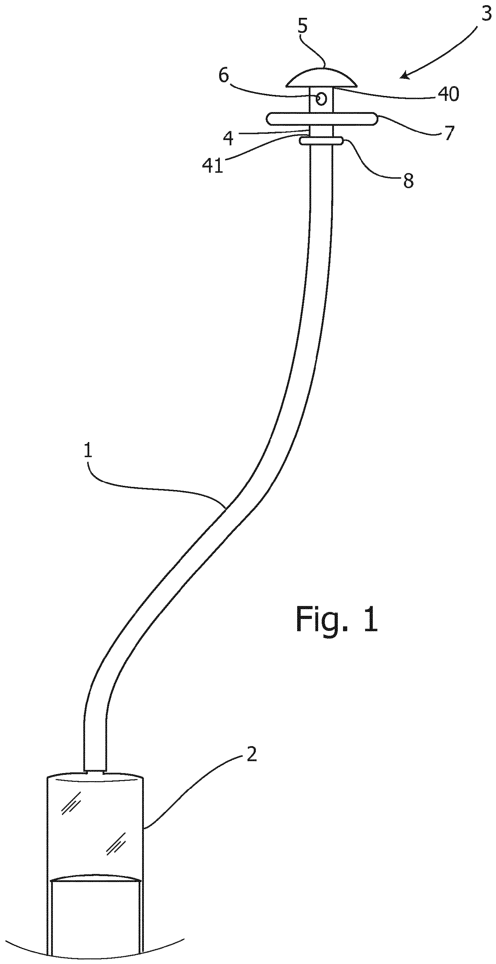

Reference is made initially to Figure 1 which represents a schematic side view of a first embodiment of the tool according to the present invention.

The tool according to the invention comprises a flexible tube 1, a syringe 2, partially shown, and a head unit 3 near a first end of the flexible tube 1 opposite to a second end that is connected to the syringe 2. The flexible tube 1, which has preferably an outer diameter of 2 mm, is made of a suitable elastic-plastic material. The head unit 3 comprises a terminal tract 4 of the flexible tube 1 and an end element 5 in the shape of a spherical cap that closes the flexible tube 1. The end element 5 is made of a suitable elastically deformable, flexible material. Formed in the terminal tract 4 in the vicinity of the end element 5 are at least two radial holes 6. The head unit 3 also comprises an abutment member 7 that is slidable in the terminal tract 4 of the flexible tube 1, and a stop element 8 in the form of an abutment collar that is fixed to the flexible tube 1. The abutment member 7 has the shape of a spherical segment. The stop element 8 limits the slide of the abutment member 7 in the terminal tract 4 of the flexible tube 1 between a distal end 40 attached to the element end 5 and a proximal end 41, in which the stop element 8 is fixed.

By way of example, the terminal tract 4 has a length of 3.5 - 4 mm and the size of the radial hole 6 is 1 - 1.5 mm.

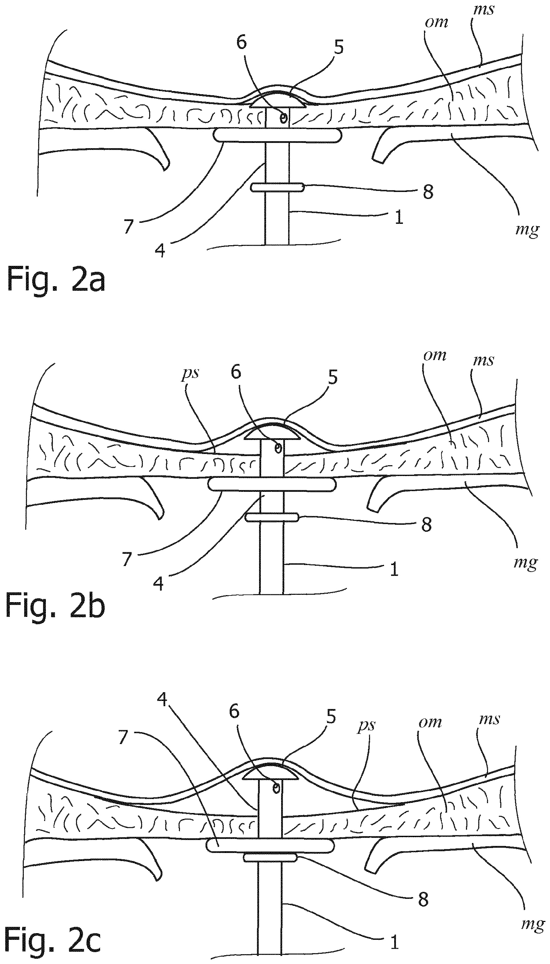

In the surgical procedure of the sinus elevation, with reference to Figures 2a, 2b, 2c which are schematic cross-section views of the tool according to the invention when inserted in the jaw in successive operative stages, the gingival mucosa *mg* is opened with crestal access, an incision into the jawbone *om* is created until a space under the Schneider's membrane *ms* is reached through piezosurgery without any perforation thereof. Inserted in the hole made is the end element 5 of the head unit 3 that as a plunger slightly raises the Schneider's membrane *ms.* Then, injected by the syringe 2 is an isotonic saline solution that, through the two holes 6 made in the terminal tract 4 of the flexible tube 1, flows between the Schneider's membrane *ms* and the sinus floor *ps.* The pressure exerted progressively dissects the Schneider's membrane from the sinus floor and lifts it as shown in Figures 2b and 2c, and creates a cavity. During the surgery, the abutment member 7 is gradually removed away from the element end 5 in a stroke in the terminal tract 4 until eventually it reaches the stop element 8, if any. Then, artificial bone is inserted in the cavity with appropriate tools after the isotonic saline solution is drained.

Ultimately, the dissection of the Schneider membrane allows to easily introduce synthetic bone, without risk of injury.

It should be understood that, with respect to other existing tools carrying out a liquid axial thrust with direct impact on the thin and fragile membrane of Schneider, is a gradual detachment of the membrane without the risk of harmful to it.

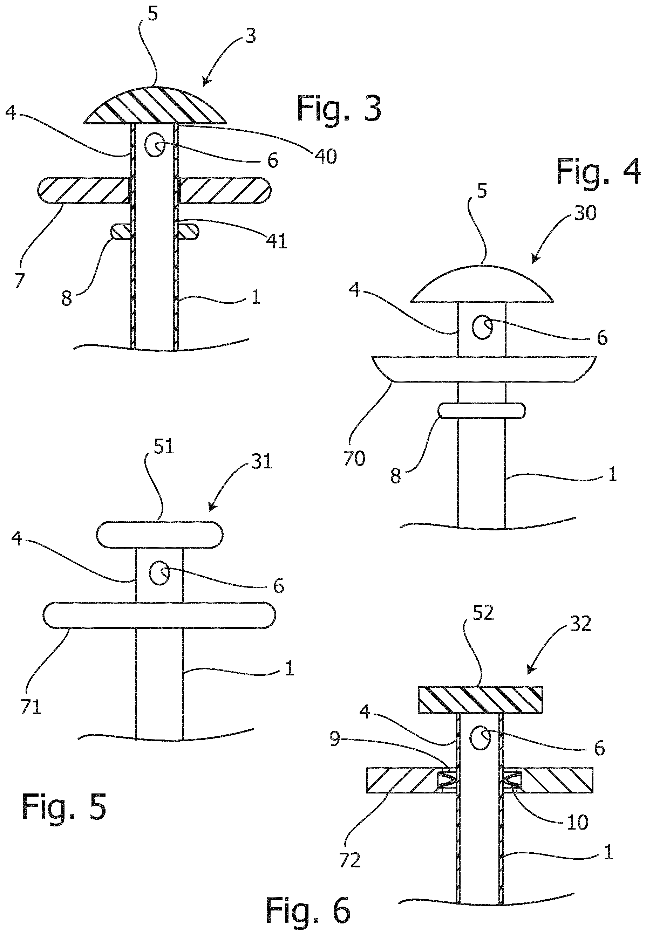

In Figure 3, which is an enlarged partial cross-section view of the tool of Figure 1, the abutment member 7 is shown freely slidable along the flexible tube 1.

Referring to Figure 4, there is shown a second embodiment of the invention. In Figure 4 same reference numerals are used for designating parts identical or similar to those of the preceding figures. The second embodiment of the invention differs from the first one due to the fact that the head unit 30 has a stop member 70 in the form of a spherical segment.

Alternatively, as shown schematically in Figure 5 wherein a third embodiment of the invention is illustrated, the head unit 31 has an abutment member 71 that does not slide. When the instrument according to the invention is free of the abutment collar as a stop element 8, they must be provided for instruments that have a terminal tract 4 of the length dependent on the size of the jawbone of the patient in treatment.

A fourth embodiment of the invention is represented in Figure 6 in enlarged partial cross-section view, where like numerals are assigned to identical or similar parts to those of the preceding figures. In this fourth embodiment of the head assembly 32 has an end element 52 of a substantially cylindrical shape as well as the stop member 72. In particular, the abutment member 72 has a groove 9 where holding elements are provided 10 such as a friction seal with the tube 1. Since an abutment collar is not provided as a stop element, the dentist must graduate with his experience the advancement of the tube under the Schneider membrane, being careful not to perforate it. In the embodiments above described, only two radial holes 6 are provided for removing the saline isotonic solution in the cavity between the sinus floor 5 and the Schneider's membrane *ms.* However, it must be understood that, if the terminal tract 4 between the end element 5 and the abutment member 7 of the head unit 3 is enlarged, with reference to the first embodiment, also four radial holes 6 may be made in the tract 4.

It will be evident that the above description has shown only several embodiments of the invention whose scope is defined in the enclosed claims.

## Claims

1. A tool for detaching the Schneider's membrane from the sinus floor comprising a syringe (2) for an isotonic saline solution, a head unit (3; 30; 31; 32) and a flexible tube (1) connecting the syringe (2) to the head unit (3; 30; 31; 32), **characterized in that** the head unit (3; 30; 31, 32) comprises:
- a terminal tract (4) of the flexible tube (1) having a distal end (40) and a proximal end (41) and being provided with at least two radial holes (6),
- an end element (5; 51; 52), which closes the terminal tract (4) in its distal end (40), the end element projecting radially with respect to the terminal tract (4), said end element being adapted to work laterally without any axial impact onto the Schneider membrane from the side of the sinus floor (ps), and
- an abutment member (7; 70; 71; 72) being coaxial to the flexible tube (1) and intended to abut the maxillary bone (*om*) on the side opposite to the Schneider's membrane (*ms*), when in working position the head unit (3; 30; 31; 32) is inserted into a hole drilled in the maxillary bone (*om*) in a surgical operation for lifting the sinus floor (ps), so as to keep the at least two radial holes open to the flow of said isotonic saline solution.

2. The tool according to claim 1, wherein the abutment member (71) is fixed to the flexible tube (1) at the proximal end (41) of its terminal tract (4).

3. The tool according to claim 1, wherein the abutment member (7; 70; 72) is movable coaxially to the flexible tube (1) in its terminal tract (4).

4. The tool according to claim 3, wherein the abutment member (72) is provided with retaining means (10) to be retained to the flexible tube (1) in its terminal tract (4).

5. The tool according to claim 3, in which the head unit (3; 30) is provided with a stop collar (8) in the proximal end (41) of the terminal tract (4).

6. The tool according to claim 1, in which the end element (5; 51; 52) has a shape selected from the group comprising the spherical cap, the rounded edge disc, and the cylinder.

7. The tool according to claim 1, in which the end element (5; 51; 52) is made of an elastically deformable material.

8. The tool according to claim 1, wherein the abutment member (7; 70; 71; 72) has a shape selected from the group comprising the rounded edge disk, the spherical segment, and the cylinder.

## Patentansprüche

1. Werkzeug zum Ablösen der Schneider-Membran vom Sinusboden umfassend eine Spritze (2) für eine isotonische Kochsalzlösung, eine Kopfeinheit (3; 30; 31; 32) und einen flexiblen Schlauch (1), der die Spritze (2) mit der Kopfeinheit (3; 30; 31; 32) verbindet, **dadurch gekennzeichnet, dass** die Kopfeinheit (3; 30; 31, 32) umfasst:
- einen Endtrakt (4) des flexiblen Schlauches (1) mit einem distalen Ende (40) und einem proximalen Ende (41), der mit mindestens zwei radialen Löchern (6) versehen ist,
- ein Endelement (5; 51; 52), das den Endtrakt (4) in dessen distalen Ende (40) verschließt, wobei das Endelement radial in Bezug auf den Endtrakt (4) vorsteht, wobei das Endelement so angepasst ist, dass es seitlich ohne axialen Stoß auf die Schneider-Membran von der Seite des Sinusbodens (ps) wirkt, und
- wobei ein Anschlagelement (7; 70; 71; 72) koaxial zum flexiblen Schlauch (1) ist und dazu bestimmt ist, am Oberkieferknochen (*om*) auf der Seite gegenüber der Schneider-Membran *(ms)* anzuliegen, wenn die Kopfeinheit (3; 30; 31; 32) in Arbeitsstellung ist, wird sie in ein im Oberkieferknochen (*om*) gebohrtes Loch bei einer chirurgischen Operation zum Anheben des Sinusbodens (*ps*) eingeführt, um die mindestens zwei radialen Löcher für den Fluss der isotonischen Kochsalzlösung offen zu halten.

2. Werkzeug nach Anspruch 1, wobei das Anschlagelement (71) an dem flexiblen Schlauch (1) am proximalen Ende (41) dessen Endtraktes (4) befestigt ist.

3. Werkzeug nach Anspruch 1, wobei das Anschlagelement (7; 70; 72) koaxial zum flexiblen Schlauch (1) in dessen Endtrakt (4) bewegbar ist.

4. Werkzeug nach Anspruch 3, wobei das Anschlagelement (72) mit Haltemitteln (10) versehen ist, die an dem flexiblen Schlauch (1) in dessen Endtrakt (4) zu halten sind.

5. Werkzeug nach Anspruch 3, wobei die Kopfeinheit (3; 30) im proximalen Ende (41) des Endtraktes (4) mit einem Anschlagkragen (8) versehen ist.

6. Werkzeug nach Anspruch 1, wobei das Endelement (5; 51; 52) eine Form aufweist, die aus der Gruppe umfassend die Kugelkappe, die abgerundete Kantenscheibe und den Zylinder ausgewählt ist.

7. Werkzeug nach Anspruch 1, wobei das Endelement (5; 51; 52) aus einem elastisch verformbaren Werkstoff hergestellt wird.

8. Werkzeug nach Anspruch 1, wobei das Anschlagelement (7; 70; 71; 72) eine Form aufweist, die aus der Gruppe umfassend die abgerundete Kantenscheibe, das Kugelsegment und den Zylinder ausgewählt ist.

## Revendications

1. Outil permettant de détacher la membrane de Schneider du plancher du sinus comprenant une seringue (2) pour une solution saline isotonique, une tête (3 ; 30 ; 31 ; 32) et un tube flexible (1) reliant la seringue (2) à la tête (3 ; 30 ; 31 ; 32), **caractérisé en ce que** la tête (3 ; 30 ; 31, 32) comprend :
- une section terminale (4) du tube flexible (1) comportant une extrémité distale (40) et une extrémité proximale (41) et étant pourvue d'au moins deux orifices radiaux (6),
- un élément d'extrémité (5 ; 51 ; 52) fermant la section terminale (4) dans son extrémité distale (40), l'élément terminal dépassant radialement par rapport à la section terminale (4), ledit élément d'extrémité étant adapté pour travailler latéralement sans aucune incidence axiale sur la membrane de Schneider à partir du côté du plancher du sinus (ps), et
- un organe de butée (7 ; 70 ; 71 ; 72) étant coaxial au tube flexible (1) et prévu pour se mettre en butée avec l'os maxillaire (*om*) sur le côté opposé de la membrane de Schneider (ms) lorsque dans la position de travail la tête (3 ; 30 ; 31 ; 32) est introduite dans un orifice percé dans l'os maxillaire (*om*) lors d'une opération chirurgicale destinée à redresser le plancher du sinus (*ps*) de manière à maintenir les au moins deux orifices radiaux ouverts aux flux de ladite solution saline isotonique.

2. Outil selon la revendication 1, dans lequel l'organe de butée (71) est fixé au tube flexible (1) en correspondance de l'extrémité proximale (41) de sa section terminale (4).

3. Outil selon la revendication 1, dans lequel l'organe de butée (7 ; 70 ; 72) est mobile coaxialement par rapport au tube flexible (1) dans sa section terminale (4).

4. Outil selon la revendication 3, dans lequel l'organe de butée (72) est pourvu de moyens de retenue (10) pour être retenus au tube flexible (1) dans sa section terminale (4).

5. Outil selon la revendication 3, dans lequel la tête (3 ; 30) est pourvue d'un collier de butée (8) dans l'extrémité proximale (41) de la section terminale (4).

6. Outil selon la revendication 1, dans lequel l'élément d'extrémité (5 ; 51 ; 52) a une forme sélectionnée à partir du groupe comprenant un bouchon sphérique, un disque à bordure arrondie et un cylindre.

7. Outil selon la revendication 1, dans lequel l'élément terminal (5 ; 51 ; 52) est constitué d'un matériau élastiquement déformable.

8. Outil selon la revendication 1, dans lequel l'organe de butée (7 ; 70 ; 71 ; 72) a une forme sélectionnée à partir du groupe comprenant un disque à bordure arrondie, un segment sphérique et un cylindre.
